# EUROPEAN PATENT APPLICATION

(11) **EP 1 246 489 A1**
(43) Date of publication of application: **02.10.2002**
(21) Application number: 01308406.6
(22) Date of filing: 02.10.2001
(51) Int. Cl.: H04Q 7/38, H04M 3/54

(54) **Method for automatic call forwarding when a mobile unit goes out of service**

(30) Priority: 23.03.2001 US 815881
(71) Applicant: LUCENT TECHNOLOGIES INC., Murray Hill, New Jersey 07974-0636 (US)
(72) Inventor: Goss, Stephen C., Wheaton, Illinois 60187 (US); Sands, Phillip Michael, Champaign, Illinois 61820 (US)
(74) Representative: Buckley, Christopher Simon Thirsk

(57) **Abstract**

The present invention provides a method for providing automatic call-forwarding service for a mobile unit. If the mobile unit is out of service, calls intended for the mobile unit are automatically forwarded to another phone. This call forwarding occurs automatically without requiring user interaction. Upon detection of the mobile unit coming into service, such as when the mobile unit powers on or enters the service area of a wireless service provider, the automatic call forwarding ceases, and the mobile unit receives its own incoming calls.

## Description

### Field of the Invention

The present invention relates generally to communication systems, and more particularly to a method for providing automatic call forwarding service for a mobile unit.

### Background of the Invention

Call forwarding allows calls intended for a first phone to be forwarded to a second phone. Call forwarding is typically initiated by inputting into the first phone a predefined sequence followed by the telephone number of the second phone. Thereafter, calls for the first phone are forwarded to the second phone. Calls are forwarded until call forwarding is cancelled, typically by inputting a predefined key sequence on the first phone. In short, call forwarding is manually activated by keying the required digits and manually deactivated in a similar manner, typically by keying predefined digits on the first phone that alert the forwarding system that call forwarding is no longer desired.

Many people have both a wireline phone in their home or office and a cellular phone that they utilize while outside of the home or office. When trying to contact someone who has both a wireline and a cellular phone, a caller often has to guess which phone is most likely to be attended and thus answered. If the caller calls the unattended phone, the caller will typically be placed into the user's voice mail or answering machine. The caller then has to either leave a message or hang up and dial the phone number of the user's other phone. This is costly, time-consuming, and frustrating for the caller.

One approach attempted to alleviate the problem of users having multiple phones and therefore multiple phone numbers is to provide a user with a single phone number that is associated with multiple phones. This approach has been difficult and costly to implement. In addition, this approach is not desired in situations where the user desires having two distinct phone numbers, as is the case when a user prefers cell phone contact with certain people and wireline contact with others. Having two distinct phone numbers can therefore be advantageous.

Therefore, a need exists for a method for allowing a user to be contacted at multiple phones without having a single phone number and without having to manually enter a code each time the user wants to activate or deactivate a call-forwarding type of functionality.

### Summary of the Invention

It is an object of the present invention to provide a method for automatically forwarding calls intended for a mobile unit when the mobile unit is out of service, such as when the mobile unit is powered off. Depending on the air interface technology, the mobile unit may send a message to the cellular system during the power off process to inform the communication system of its out-of-service status. Out-of-service status can also be concluded by the cellular system if there is no indication that the mobile unit is roaming and there are no mobile unit responses to pages for call delivery, authentication, or other mobile specific requests from the cellular system. The phone to which calls are forwarded, referred to herein as the forwarded phone, can be a wireline phone or a mobile phone.

In accordance with the present invention, a user signs up with a wireless service provider for automatic call forwarding service. Preferably, the subscriber record for the mobile phone includes a call forwarding active field and a call forwarding number field, sometimes referred to as the forwarding number field, that is populated with the directory number of the forwarded phone.

In the preferred embodiment, when a call request is received for a mobile phone, the wireless system determines if the mobile unit is in service. If the mobile unit is not in service, the wireless system checks to see if automatic call forwarding is active for the mobile phone. This is accomplished by checking the call forwarding active field in the subscriber record associated with the mobile unit. The call forwarding active field is preferably a one-bit field that includes a "1" if automatic call forwarding is active and a "0" if automatic call forwarding is not currently active. If the call forwarding active field indicates that the automatic call forwarding feature is not currently active, then automatic call forwarding is not performed and typical processing of the call request occurs. This can include continuous ringing or directing the calling party to the voice mail of the mobile phone.

If the mobile unit is not in service and if the call forwarding active field indicates that automatic call forwarding is currently active, the wireless system routes the call request to the forwarded phone's service provider. The wireless system uses existing signaling systems to route the call request.

When the mobile unit comes into service, such as by powering on and/or entering and registering in an effective wireless coverage area of the home or visited wireless system, automatic call forwarding is deactivated so that automatic call forwarding does not occur. The wireless system preferably toggles the call forwarding active field to "0", indicating that automatic call forwarding is not currently active for this mobile unit. Consequently, the wireless system will not perform automatic call forwarding for the mobile unit. The wireless system will instead route the call request to the mobile unit that is now in service.

Thus, the present invention allows a user to be more reachable because call forwarding is automatically controlled based upon the mobile phone being in or out of service at the time of a call to the mobile phone. The present invention provides for automatic call forwarding such that the user does not need to manually activate (or deactivate) call forwarding each time he or she powers off (or on) the mobile unit. The present invention thereby provides for greater access to the user, a lower number of missed phone calls, and an increase in time saved by not requiring the user to manually control the forwarding of calls.

### Brief Description of the Drawings

FIG. 1 depicts a communication system in accordance with the present invention.
FIG. 2 depicts a flowchart of a method for providing automatic call forwarding from a mobile unit to a forwarded phone in accordance with the present invention.

### Description of the Preferred Embodiment(s)

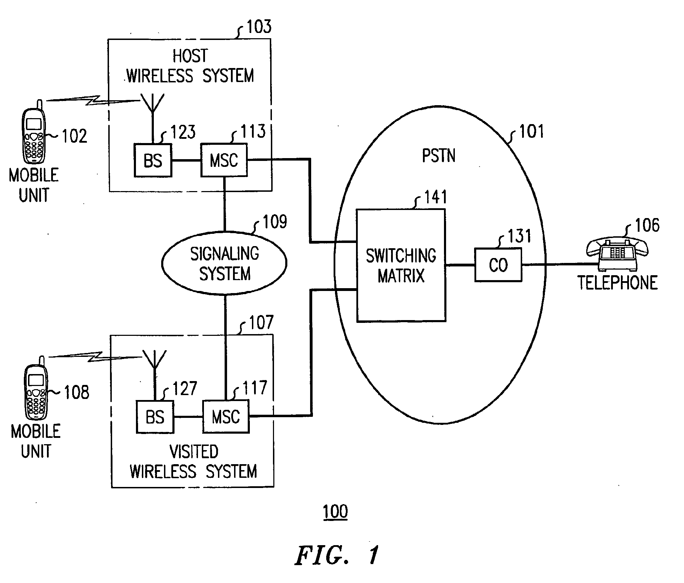

FIG. 1 depicts a communication system 100 in accordance with the present invention. Communication system 100 includes Public Switched Telephone Network (PSTN) 101, Home Wireless System 103, Visited Wireless System 107, and Signaling System 109. Mobile unit 102, telephone 106, and mobile unit 108 are depicted and are capable of communicating with each other via communication system 100.

Mobile unit 102 is a wireless device, preferably a cellular phone. Mobile unit 102 can alternately be a pager, a wireless internet access device, or any other wireless device that communicates over Radio Frequencies (RF) with home wireless system 103.

Mobile unit 108 is a wireless device, preferably a cellular phone. Mobile unit 108 can alternately be a pager, a wireless internet access device, or any other wireless device that communicates over Radio Frequencies (RF) with visited wireless system 107.

PSTN 101 includes a Central Office (CO) switch 131 and a switching/transmission matrix 141 which includes other switches and interconnections associated with PSTN 101.

Home Wireless System 103 is preferably a cellular system that includes Mobile Switching Center (MSC) 113 and at least one Base Station (BS) 123. Alternately, home wireless system 103 can be a paging system, a mobile internet system, or any wireless system that provides communication over RF with mobile unit 102.

Visited Wireless System 107 is preferably a cellular system that includes Mobile Switching Center (MSC) 117 and at least one Base Station (BS) 127. Alternately, Visited Wireless System 107 can be a paging system, a mobile internet system, or any other wireless system that provides communication over RF with mobile unit 108.

Signaling system 109 is disposed between Home Wireless System 103 and Visited Wireless System 107 and provides for control signals to be sent between the systems. Signaling system 109 can be based on standardized protocols, such as TIA/EIA-41 or GSM MAP, or can be a proprietary design.

In the present invention, the forwarded phone can be either a wireline phone, such as phone 106, or a wireless or mobile unit, such as mobile unit 108.

In accordance with the present invention, when mobile unit 102 goes out of service, calls intended for mobile unit 102 are automatically forwarded to the forwarded phone, such as wireline phone 106 or mobile phone 108. Mobile unit 102 goes out of service when it powers off or ceases to be in communication with home wireless system 103 or visited wireless system 107.

Thus, when incoming calls are placed to mobile phone 102, call processing determines whether mobile unit 102 is in service. In the preferred embodiment of the present invention, the call processing functionality is performed within a processor located within MSC 113. Alternately, the call processing functionality occurs within any processor within communication system 100, such as in a Wireless Intelligent Network, not shown but understood in the art.

If mobile unit 102 is in service, typical in-service call processing functionality takes place. MSC 113 receives the call request, and upon determining that mobile unit 102 is in service, performs typical processing of the call, which can include ringing mobile unit 102 or sending the calling party to the voice mailbox of mobile unit 102 if mobile unit 102 does not answer the call request or is currently involved in a call.

If mobile unit 102 is not in service, MSC 113 determines if the automatic call forwarding service is active by retrieving the call forwarding active field from the subscriber record for mobile unit 102. If the call forwarding active field indicates that automatic call forwarding service is not active for mobile unit 102, MSC 113 performs typical not-in-service processing. This can include directing the caller to the voice mailbox associated with mobile unit 102.

If mobile unit 102 is in service and the call forwarding active field indicates that automatic call forwarding is active for mobile unit 102, MSC 113 retrieves the automatic call forwarding number from the subscriber record associated with mobile unit 102. MSC 113 forwards the call request to the directory number retrieved from the call forwarding number field of the subscriber record.

The user of mobile unit 102 preferably subscribes for automatic call forwarding service by entering into an agreement with a wireless service provider. The automatic call forwarding service is set up such that calls intended for mobile unit 102 are automatically forwarded, without further user input, to a forwarded phone, such as wireline phone 106 for example, any time that mobile unit 102 is not in service. In this manner, a user will be forwarded calls that were originally directed to his or her mobile unit 102 to his or her wireline phone 106, such as a home telephone or a different mobile unit. The forwarded phone is depicted as a wireline phone in FIG. 1, but can alternately be wireless phone 108 or any other telecommunication device.

It is a feature of the present invention that the user of mobile unit 102 can specify, preferably by talking to a service provider/operator or alternately by interacting with an automated system, multiple forwarded phone numbers and the conditions under which calls are forwarded to specific forwarded numbers. For example, if mobile unit 102 is not in service, the user may specify that incoming calls be routed to the user's office phone during business hours and to the user's home phone during non-business hours. In this manner, the probability of calls reaching the user is greatly increased.

This is preferably accomplished by periodically checking a condition against a value and updating the forwarded number field of the subscriber record accordingly. For example, a user could arrange to have calls intended for his mobile unit to be automatically forwarded to his business number if the incoming call occurs from Monday to Friday between the hours of 8:00 a.m. and 5:00 p.m. If the incoming call request occurs outside of these hours, the call is automatically forwarded to a second forwarded phone, such as the user's home phone. In this example, home wireless system 103 checks periodically to determine if a condition has been satisfied. For example, home wireless system 103 may determine if the day is between Monday and Friday and if the time is between 8:00 a.m. and 5:00 p.m. If so, the directory number of the user's business phone is stored in the forwarded number field of the mobile unit's subscriber record. If a later periodic check determines that it is no longer a business day (Monday through Friday) or the time is outside of the 8:00 a.m. to 5:00 p.m. window, the directory number of the user's home phone is stored in the forwarded number field of the subscriber record of the mobile unit.

Multiple forwarded number fields can also be used to facilitate automatic call forwarding. Examples include, but are not limited to, automatically routing long-distance calls to a first forwarded number and local calls to a second forwarded number, automatically forwarding call requests from a predetermined exchange to a first forwarded number and all other calls to a second forwarded phone. In these embodiments, the subscriber record includes multiple forwarded number fields. The MSC checks the condition at the time of the incoming call request, and based on the result of this determination, knows to which of the forwarded numbers to route the call.

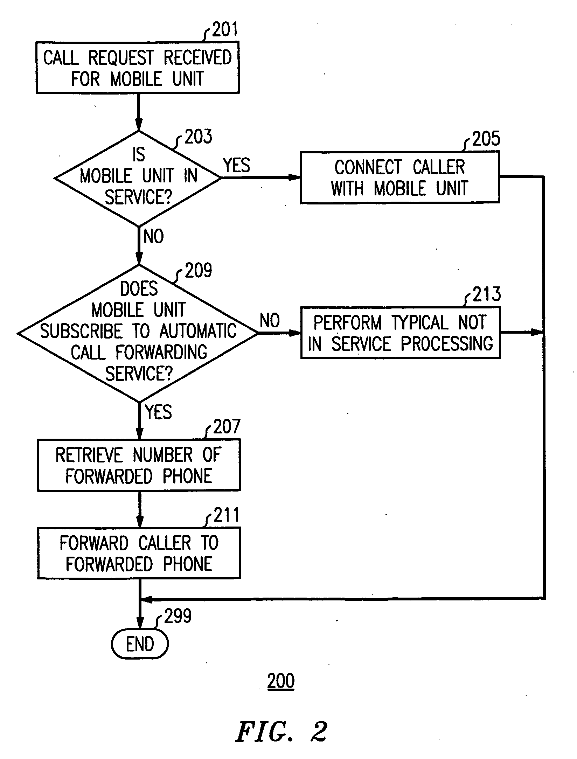

FIG. 2 depicts a flowchart 200 of a method for providing automatic call-forwarding from a mobile unit to a forwarded phone in accordance with the present invention.

A call request is received (201) for mobile unit 102. The call request can originate from a mobile unit, a wireline phone, or any other communication device. The call request is routed to a call processing function, preferably located within MSC 113.

MSC 113 determines (203) if mobile unit 102 is in service. A mobile unit is considered to be in service if it can respond to a page or an order in home wireless system 103 or visited wireless system 107 that provides service within communication system 100. A mobile unit can go out of service by powering off or by leaving the effective coverage area of communication system 100, or by losing RF connectivity with all base stations within communication system 100.

The step of determining that mobile unit 102 is in service preferably comprises receiving a transmission from the mobile unit- in response to a page, for example. The paging message is preferably sent on a periodic time basis. Alternately, the paging message can be sent after mobile unit 102 fails to respond to a page or an order. If mobile unit 102 does not respond to a paging message within a predetermined number of attempts or within a predetermined period of time, MSC 113 assumes that mobile unit 102 has gone out of service.

If mobile unit 102 is in service, MSC 113 connects (205) the caller with mobile unit 102, as is known in the art. This can include providing call waiting service, voice mail service, or any other service provided to mobile units in a wireless communication system. The process then ends (299).

If mobile unit 102 is not in service, MSC 113 determines (209) if mobile unit 102 subscribes to the automatic call forwarding service. This is preferably done by checking the call forwarding active field in the subscriber record. The automatic call forwarding service can be provided as a free service to subscribers or as a paid service with a per-usage charge or unlimited use for a periodic fee.

If mobile unit 102 does not subscribe to automatic call forwarding service, MSC 113 performs (213) typical call processing functionality for a mobile unit that is not in service. These functions can include playing a message to the caller that the mobile unit is not in service, connecting the caller with the mobile unit's voice mailbox, or continually ringing the mobile unit until the caller hangs up. The process then ends (299).

If mobile unit 102 has subscribed to the automatic call forwarding service, MSC 113 retrieves (207) the phone number of the forwarded phone from the subscriber record. This number is preferably stored in a database, such as a Home Location Register (HLR), coupled to MSC 113. The data is preferably stored in a database that links the directory number of mobile unit 102 with the forwarded number. MSC 113 then retrieves the record associated with mobile unit 102 and extracts the forwarded number from the forwarded number field of the retrieved subscriber record. MSC 113 forwards (211) the caller to the phone associated with the forwarded phone. This forwarded phone can be a wireline phone, a mobile phone, or any other communication device.

Thus, the present invention solves problems associated with the prior art by providing a method for automatically forwarding calls intended for a mobile unit whenever the mobile unit is not in service. This is accomplished by detecting when the mobile unit goes out of service, such as when it is powered off or taken outside an effective service area.

If the user signs a mobile unit up for automatic call forwarding, any calls placed to the mobile unit when it is out of service will be forwarded to a predetermined forwarded number automatically, without requiring the user to manually activate call forwarding. When the mobile unit comes back into service, call forwarding ceases automatically, without requiring user interaction, allowing calls to be received at the mobile unit again.

By not requiring the mobile user to manually activate or deactivate call forwarding, the present invention makes call forwarding easier and less time consuming for the user. It also makes call delivery more reliable by increasing the number of calls that are properly terminated - whether to the mobile unit when it is in service, or to a user-specified forwarded phone when it the mobile is out of service.

While this invention has been described in terms of certain examples thereof, it is not intended that it be limited to the above description, but rather only to the extent set forth in the claims that follow.

## Claims

1. A method for call-forwarding comprising the steps of:
detecting that a mobile unit has gone out of service; and
automatically forwarding calls intended for the mobile unit to a forwarded phone when the mobile unit has gone out of service.

2. A method for call-forwarding in accordance with claim 1, wherein the step of detecting that the mobile unit has gone out of service comprises detecting that the mobile unit has powered off.

3. A method for call-forwarding in accordance with claim 1, wherein the step of detecting that the mobile unit has gone out of service comprises detecting that the mobile unit is no longer located in a predetermined service area.

4. A method for call-forwarding in accordance with claim 1, the method further comprising the steps of:
detecting that the mobile unit has come into service; and
automatically ceasing the forwarding of calls to the forwarded phone.

5. A method for call-forwarding in accordance with claim 1, wherein the step of detecting that the mobile unit has gone out of service comprises the steps of:
sending a paging message to the mobile unit; and
determining that the mobile unit has gone out of service upon not receiving a response to the paging message within a predetermined time period.

6. A method for call-forwarding in accordance with claim **5**, wherein the step of sending a paging message to the mobile unit occurs on a periodic time basis.

7. A method for providing automatic call forwarding of calls intended for a mobile unit, the method comprising the steps of:
storing a call-forwarding number associated with the mobile unit; and
automatically forwarding calls intended for the mobile unit to the call-forwarding number when the mobile unit is out of service.

8. A method for providing call forwarding in accordance with claim **7** , wherein the step of automatically forwarding calls comprises automatically forwarding calls intended for the mobile unit upon detecting that the mobile unit has powered off.

9. A method for providing automatic call-forwarding for calls intended for a mobile unit, the method comprising the steps of:
receiving a call request for the mobile unit;
determining whether the mobile unit is in service; and
automatically forwarding the call request to a forwarded phone if it is determined that the mobile unit is not in service.

10. A method for providing automatic call forwarding for calls intended for a mobile unit in accordance with claim **9**, wherein the step of determining whether the mobile unit is in service comprises checking a field in a subscriber record associated with the mobile unit.
